# EUROPEAN PATENT APPLICATION

(11) **EP 3 992 888 A1**
(43) Date of publication of application: **04.05.2022**
(21) Application number: 20832435.0
(22) Date of filing: 27.01.2020
(51) Int. Cl.: G06Q 30/02

(54) **INFORMATION MANAGEMENT SYSTEM, INFORMATION MANAGEMENT DEVICE, AND INFORMATION MANAGEMENT METHOD**

(30) Priority: 27.06.2019 JP 2019120177
(71) Applicant: Panasonic Intellectual Property Management Co., Ltd., Osaka-shi, Osaka 540-6207 (JP)
(72) Inventor: YAMADA, Mitsuki, Chuo-ku, Osaka-shi, Osaka 540-6207 (JP); YAMAMOTO, Masaya, Chuo-ku, Osaka-shi, Osaka 540-6207 (JP); TANAKA, Kotaro, Chuo-ku, Osaka-shi, Osaka 540-6207 (JP); HITOTSUYA, Masashi, Chuo-ku, Osaka-shi, Osaka 540-6207 (JP)
(74) Representative: Vigand, Philippe
(86) International application number: PCT/JP2020/002657
(87) International publication number: WO 2020/261624

(57) **Abstract**

An information management system (1) includes: an attribute information DB (318) that stores attribute information of a user as user information; a data obtainer (311) that obtains, from at least one home appliance (100) used by the user, first device data including an operating status of the at least one home appliance (100); and an updater (316) that updates the user information stored in the attribute information DB (318), using first attribute information that is based on the first device data obtained. The updater (316) compares the first attribute information and second attribute information stored in the attribute information DB (318) as the user information to determine whether a difference is present between the first attribute information and the second attribute information, and updates the user information with the first attribute information when determining that the difference is present, and does not update the user information when determining that no difference is present.

## Description

### [Technical Field]

The present disclosure relates to an information management system, an information management device, and an information management method.

### [Background Art]

Patent Literature (PTL) 1 discloses a server device that registers the contact information of a client who has purchased a product and sends a notification about the product to the registered contact information.

### [Citation List]

### [Patent Literature]

[PTL 1] WO2013/164911

### [Summary of Invention]

### [Technical Problem]

When the contact information of the client has changed, the foregoing server device requires the client to register new contact information. Without such registration, the server device cannot update the contact information of the client to the latest information.

As thus described, the user information of a device user is desired to be updated to the latest information.

The present disclosure provides an information management system and others capable of updating the user information of a device user to the latest information.

### [Solution to Problem]

The information management system according to the present disclosure includes: a storage that stores attribute information of a user as user information; an obtainer that obtains first device data from at least one first device used by the user, the first device data including an operating status of the at least one first device; and an updater that updates the user information stored in the storage, using first attribute information that is based on the first device data obtained. The updater: compares the first attribute information and second attribute information to determine whether a difference is present between the first attribute information and the second attribute information, the second attribute information being stored in the storage as the user information; and updates the user information with the first attribute information when determining that the difference is present, and does not update the user information when determining that the difference is not present.

These general and specific aspects may be implemented using a device, a method, an integrated circuit, a computer program, or a computer-readable recording medium such as a CD-ROM, or any combination of devices, methods, integrated circuits, computer programs, or computer-readable recording media.

### [Advantageous Effects of Invention]

The information management system according to the present disclosure is capable of updating the user information of a device user to the latest information.

### [Brief Description of Drawings]

[FIG. 1]

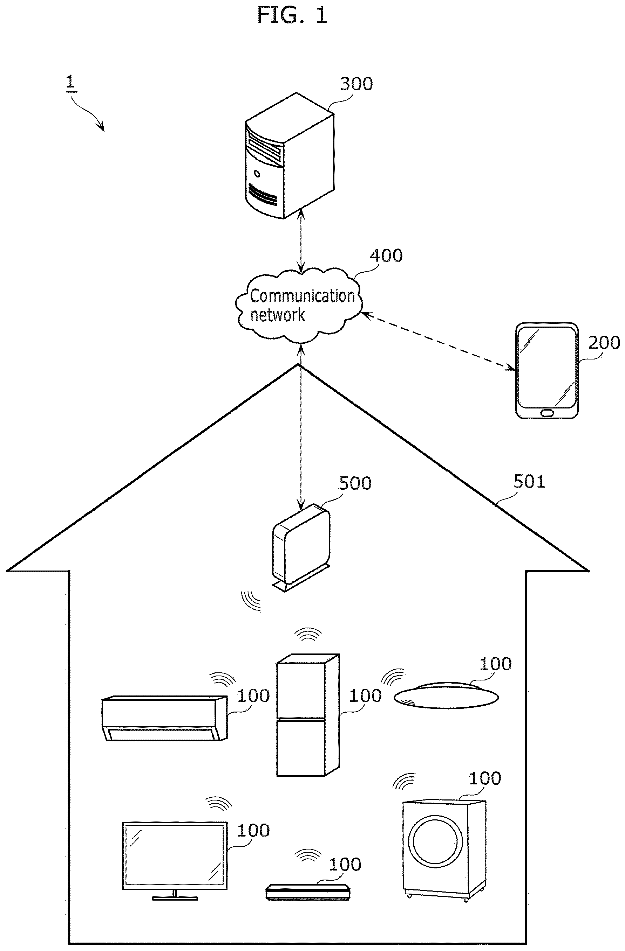

   FIG. 1 is a schematic view of an information management system according to Embodiment 1.
[FIG. 2]

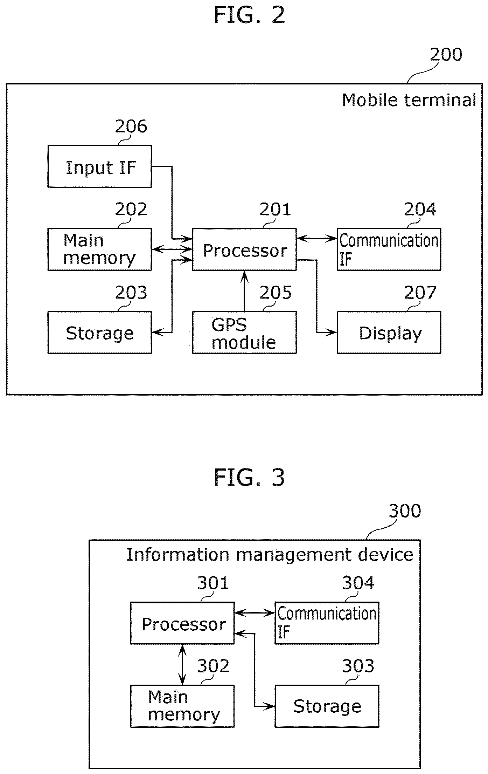

   FIG. 2 is a block diagram showing an exemplary hardware configuration of a mobile terminal according to Embodiment 1.
[FIG. 3]
   FIG. 3 is a block diagram showing an exemplary hardware configuration of an information management device according to Embodiment 1.
[FIG. 4]

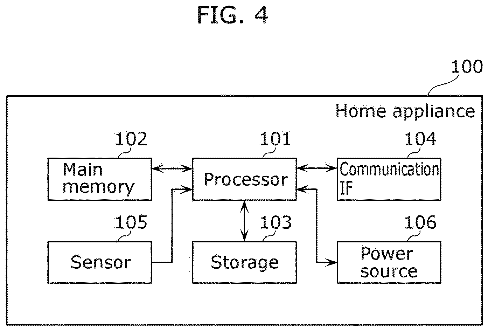

   FIG. 4 is a block diagram showing an exemplary hardware configuration of a home appliance according to Embodiment 1.
[FIG. 5]

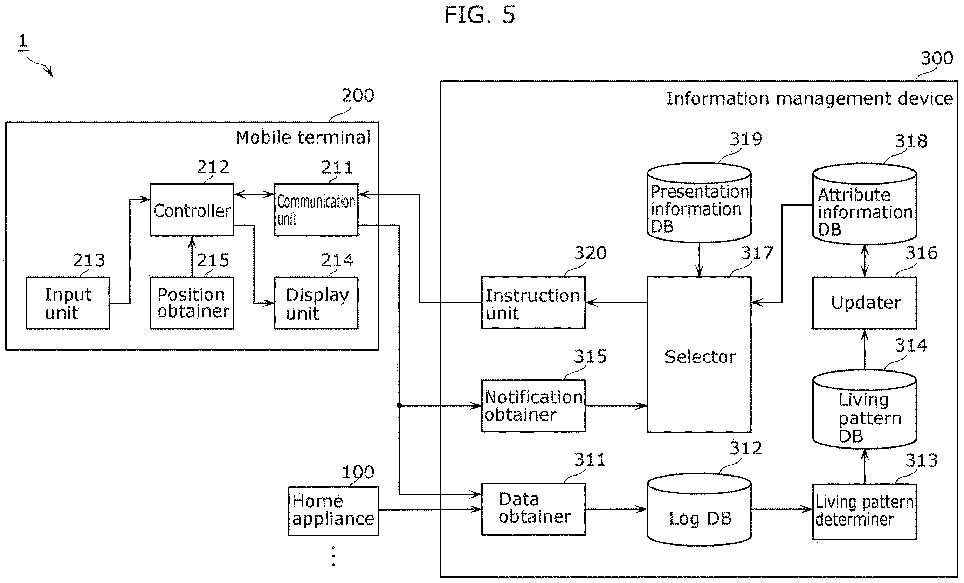

   FIG. 5 is a block diagram showing an exemplary functional configuration of the information management system according to Embodiment 1.
[FIG. 6]

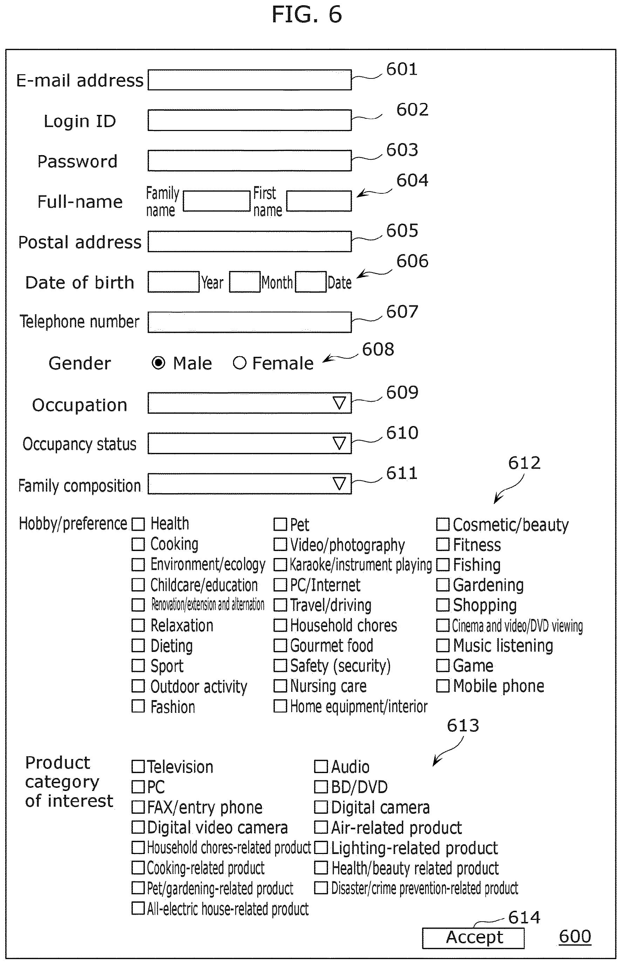

   FIG. 6 is a diagram showing an exemplary UI used for user registration.
[FIG. 7]

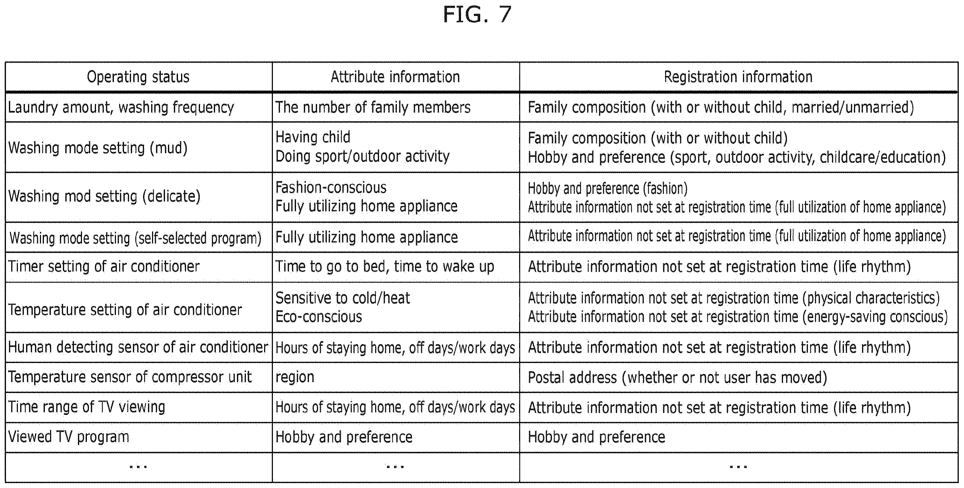

   FIG. 7 is a diagram showing a relation among an operating status indicated by device data, attribute information estimated from the operating status, and registration information that is attribute information registered in an attribute information database.
[FIG. 8]

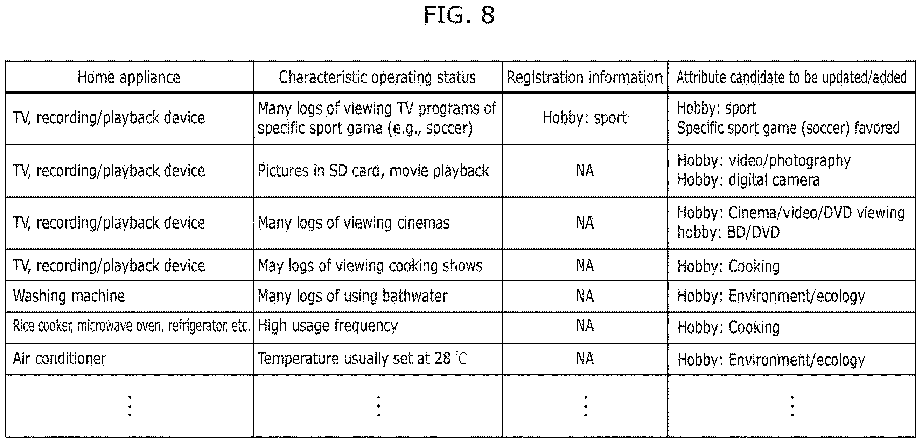

   FIG. 8 is a diagram showing a relation among home appliance(s), a characteristic operating status, registration information, and an attribute candidate to be updated/added.
[FIG. 9]

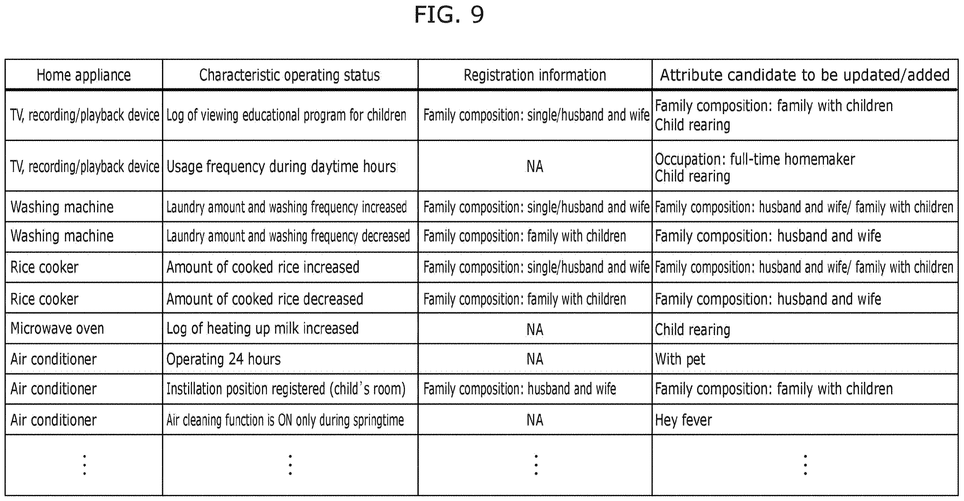

   FIG. 9 is a diagram showing a relation among home appliance(s), a characteristic operating status, registration information, and an attribute candidate to be updated/added.
[FIG. 10]

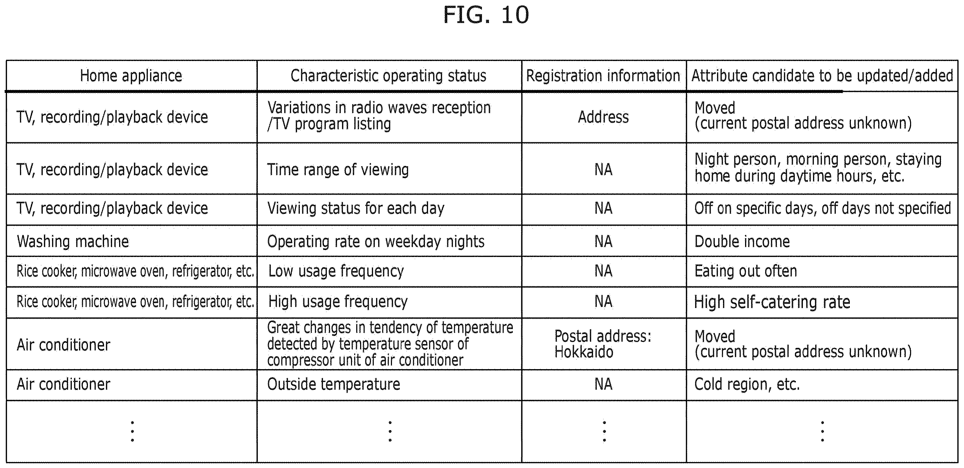

   FIG. 10 is a diagram showing a relation among home appliance(s), a characteristic operating status, registration information, and an attribute candidate to be updated/added.
[FIG. 11]

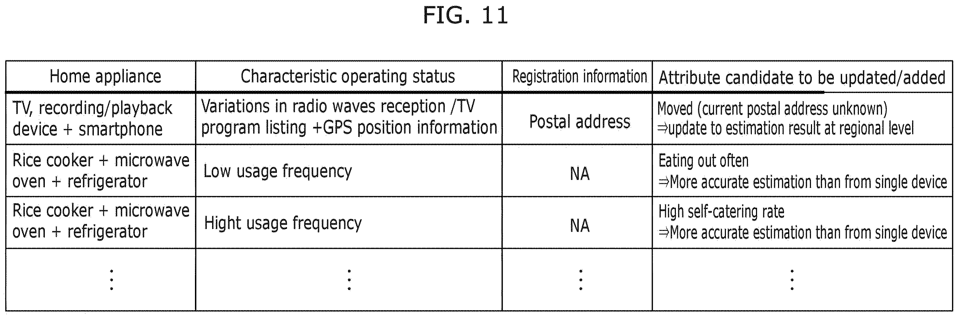

   FIG. 11 is a diagram showing a relation among home appliance(s), a characteristic operating status, registration information, and an attribute candidate to be updated/added.
[FIG. 12]

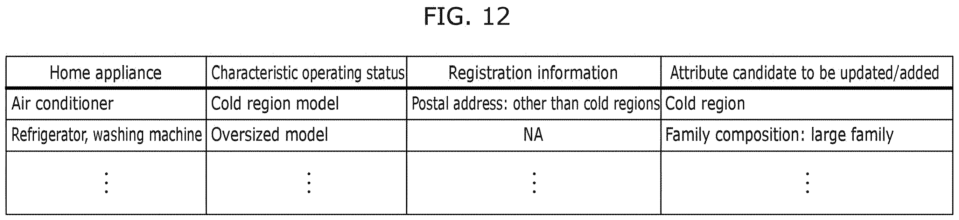

   FIG. 12 is a diagram showing a relation among home appliance(s), characteristic performance information, registration information, and an attribute candidate to be updated/added.
[FIG. 13]

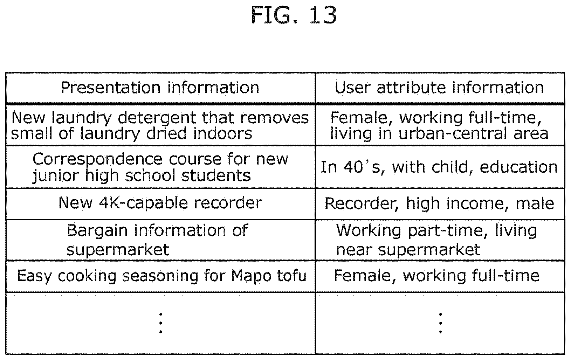

   FIG. 13 is a diagram showing an example of presentation information associated with attribute information.
[FIG. 14]

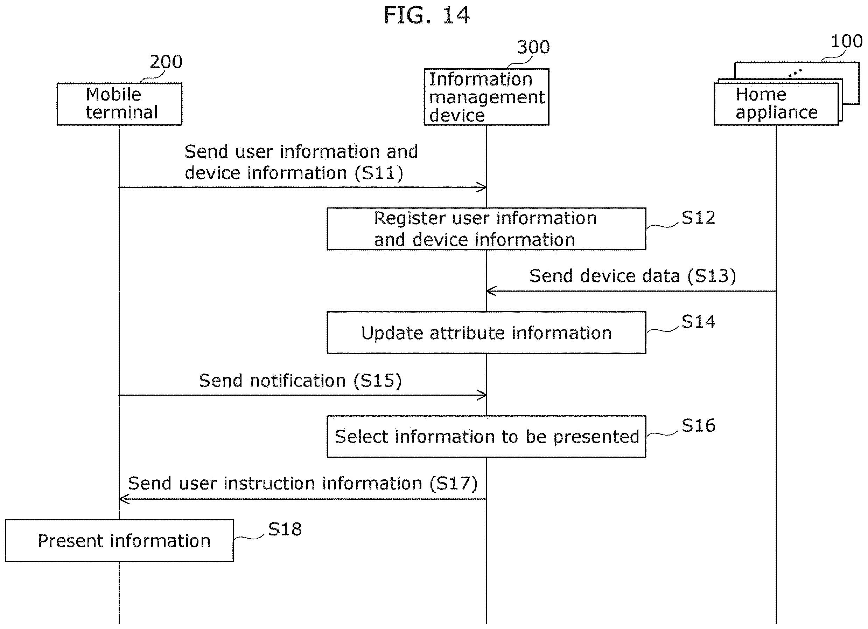

   FIG. 14 is a sequence diagram showing an exemplary information management method performed in the information management system.
[FIG. 15]

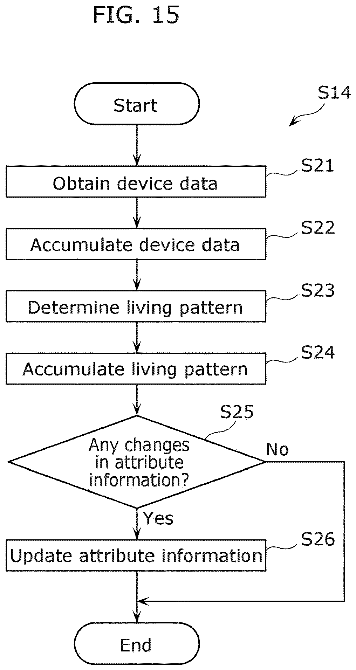

   FIG. 15 is a flowchart of an exemplary process of updating attribute information.
[FIG. 16]

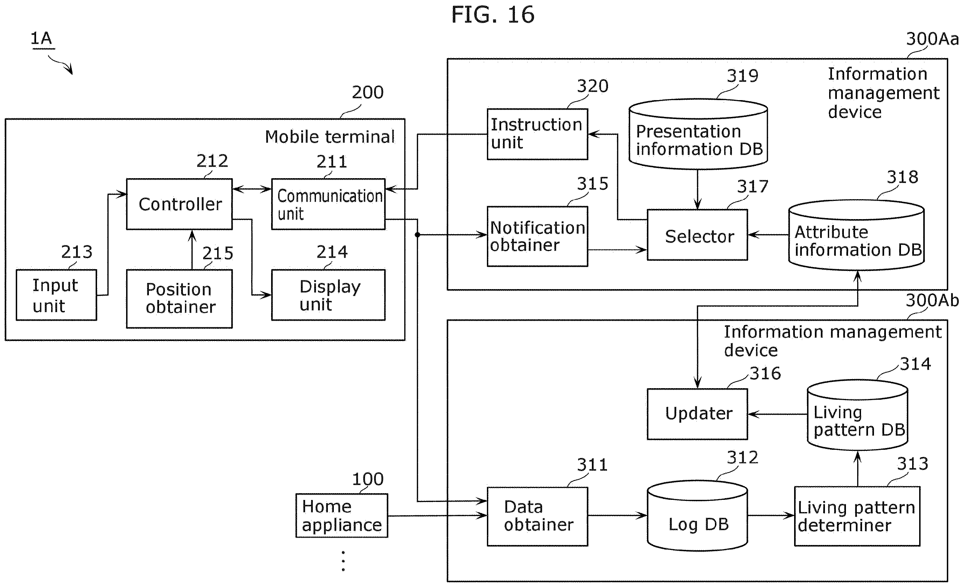

   FIG. 16 is a block diagram showing an exemplary functional configuration of an information management system according to Variation 1 of Embodiment 1.
[FIG. 17]

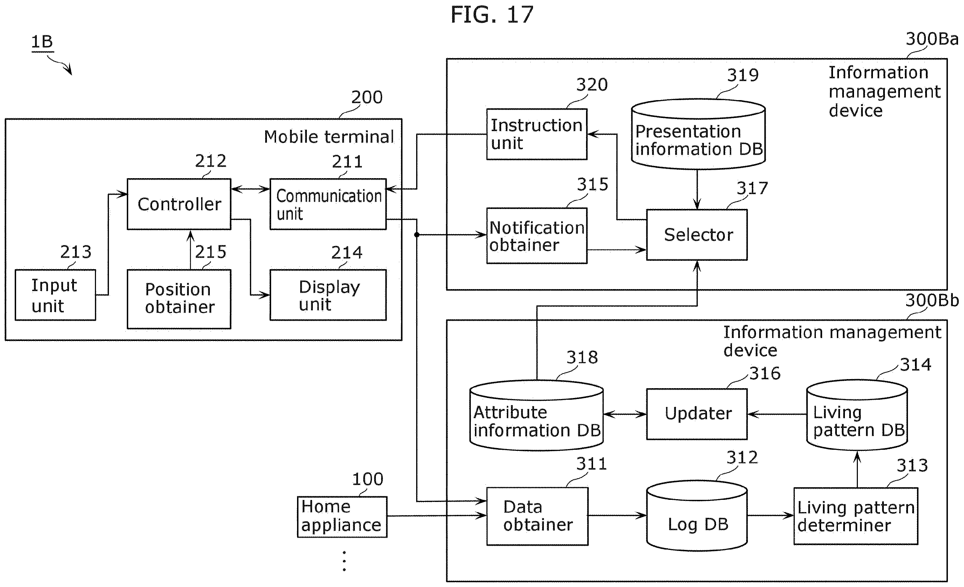

   FIG. 17 is a block diagram showing an exemplary functional configuration of an information management system according to Variation 2 of Embodiment 1.
[FIG. 18]

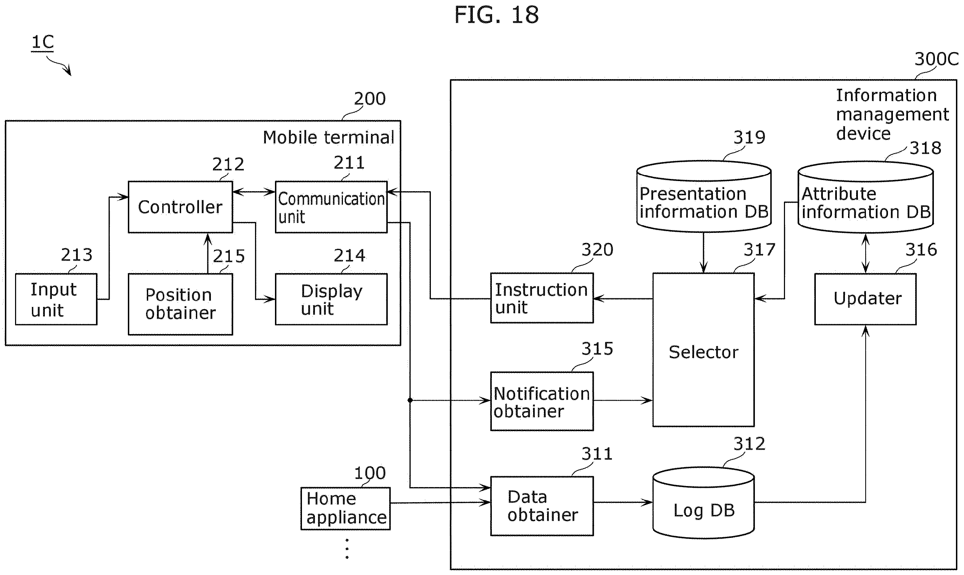

   FIG. 18 is a block diagram showing an exemplary functional configuration of an information management system according to Variation 3 of Embodiment 1.
[FIG. 19]

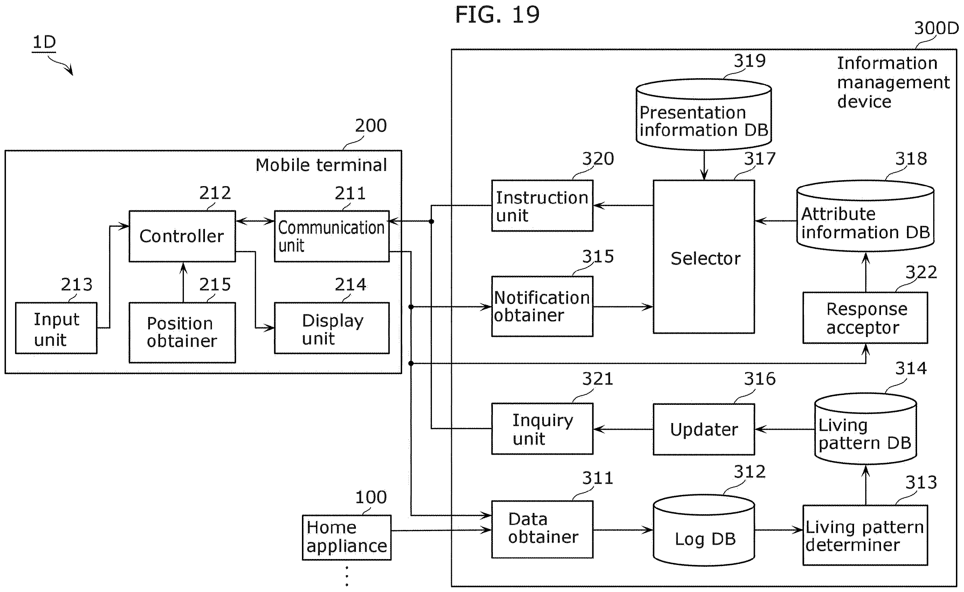

   FIG. 19 is a block diagram showing an exemplary functional configuration of an information management system according to Embodiment 2.
[FIG. 20]

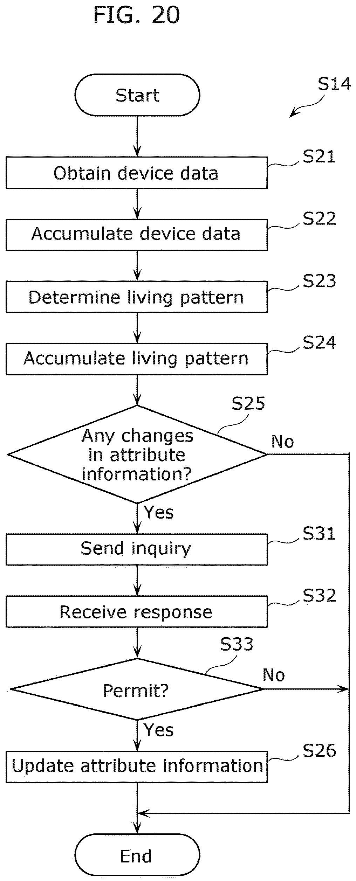

   FIG. 20 is a flowchart of an exemplary process of updating attribute information performed by an information management device according to Embodiment 2.
[FIG. 21]

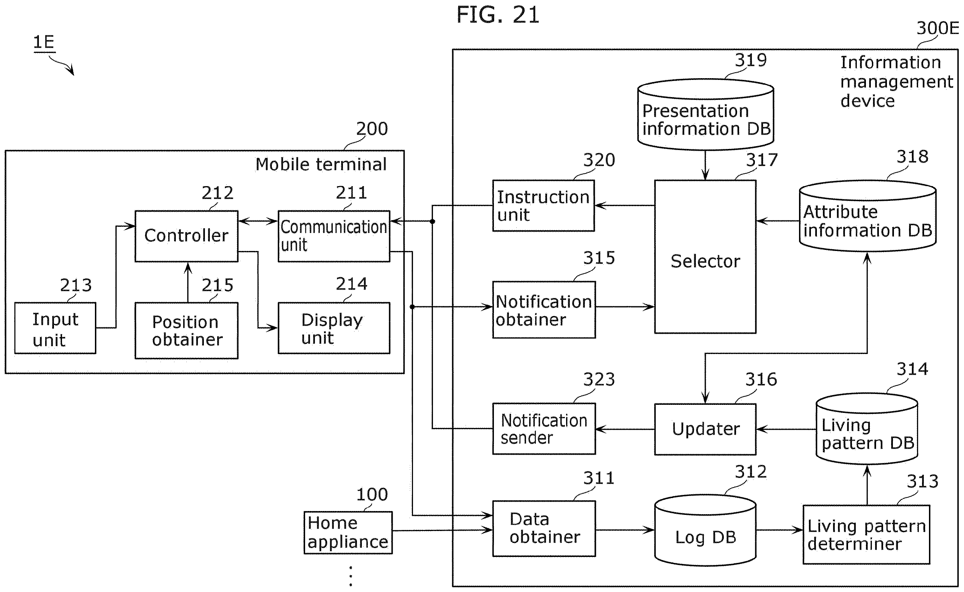

   FIG. 21 is a block diagram showing an exemplary functional configuration of an information management system according to Embodiment 3.
[FIG. 22]

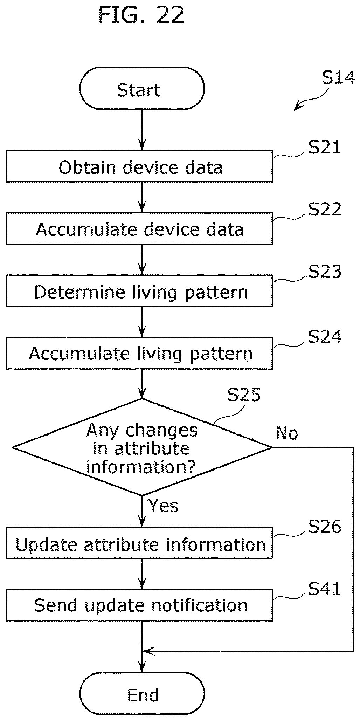

   FIG. 22 is a flowchart of an exemplary process of updating attribute information performed by an information management device according to Embodiment 3.

### [Description of Embodiments]

### (Underlying Knowledge Forming Basis of the Present Disclosure)

In PTL 1, the contact information of a client needs to be registered by a person. When the contact information has changed, new contact information also needs to be registered by the person. Since it takes time and trouble to update the contact information as described above, the old contact information can be managed without being updated even after the contact information of the client has changed. Such problem applies not only to the management of contact information, but also to the management of user information such as user's attribute information.

In the registration or updating of attribute information such as a person's hobby/preference, etc., for example, the person registers the attribute information on the basis of a subjective view of the person. As such, unconscious preferences of such person cannot be registered as attribute information. In view of this, user's attribute information is also desired to be updated using objective data.

The information management system according to the present disclosure includes: a storage that stores attribute information of a user as user information; an obtainer that obtains first device data from at least one first device used by the user, the first device data including an operating status of the at least one first device; and an updater that updates the user information stored in the storage, using first attribute information that is based on the first device data obtained. The updater: compares the first attribute information and second attribute information to determine whether a difference is present between the first attribute information and the second attribute information, the second attribute information being stored in the storage as the user information; and updates the user information with the first attribute information when determining that the difference is present, and does not update the user information when determining that the difference is not present.

With this, the user information is updated using the first attribute information that is based on the first device data obtained from the at least one first device used by the user. This enables to update the user information, which is less likely to be updated after being registered, using the first device data. Also, the user information is updated using the first device data that has been obtained on the basis of objective data. This enables an accurate updating of the user information. Also, the user information is updated when there are any changes in the user information and not updated when there is no change in the user information. This reduces processing load when there is no change in the user information.

The information management system may further include: an inquiry sender that sends an inquiry to an information processing terminal used by the user when the updater determines that the difference is present, the inquiry being intended to confirm whether the first attribute information is appropriate; and a response acceptor that accepts a response to the inquiry from the information processing terminal, and permits or prohibits updating of the user information by the updater, in accordance with the response received.

With this, the user is asked to confirm whether the first attribute information is appropriate to determine whether to permit or prohibits the updating of the user information, when there is any changes in the user information. This enables a more appropriate updating of the user information.

The information management system may further include: a notification sender that sends an update notification to an information processing terminal used by the user when the updater determines that the difference is present, the update notification indicating that the user information has been updated with the first attribute information.

This enables the user to be notified of that the user information has been updated with the first attribute information when there are any changes in the user information.

The information management system may further include: an estimator that estimates current attribute information of the user as the first attribute information, based on the first device data obtained. This enables to estimate the current attribute information of the user on the basis of the first device data.

The obtainer may obtain at least one item of first device data from a single first device, the at least one item of first device data each being the first device data, the single first device being one of the at least one first device, and the estimator may estimate the first attribute information, based on the at least one item of first device data.

With this, the first attribute information is estimated on the basis of at least one item of first device data obtained from a single first device. This enables an efficient estimation of the first attribute information.

The obtainer may obtain the first device data from each of a plurality of first devices each being one of the at least one first device, and the estimator may estimate the first attribute information, based on the first device data obtained from each of the plurality of first devices.

With this, the first attribute information is estimated on the basis of the items of first device data obtained from a plurality of first devices. This enables an accurate estimation of the first attribute information.

The obtainer may further obtain second device data from a second device that is an information processing terminal used by the user, the second device data including an operating status of the second device, and the estimator may estimate the first attribute information based on the first device data and the second device data that have been obtained.

With this, the first attribute information is estimated further on the basis of the second device data in addition to the first device data. This enables an accurate estimation of the first attribute information.

The first device data obtained by the obtainer may include performance information on a performance of the at least one first device.

With this, the first attribute information is estimated on the basis of the first device data including performance information. This enables an accurate estimation of the first attribute information.

These general and specific aspects may be implemented using a device, a method, an integrated circuit, a computer program, or a computer-readable recording medium such as a CD-ROM, or any combination of systems, devices, integrated circuits, computer programs, or computer-readable recording media.

Hereinafter, some exemplary embodiments are described in greater detail with reference to the accompanying Drawings. Note, however, that detailed description more than necessary may be omitted. For example, detailed description of a well-known matter or repetitive description of substantially the same configurations may be omitted. This is to prevent the following description from being redundant more than necessary, and to help those skilled in the art easily understand the following description.

Also note that the attached drawings and the following description are provided, by the inventors, for those skilled in the art to fully understand the present disclosure, and thus should not be construed to limit the spirit and scope of the appended claims.

### [Embodiment 1]

With reference to FIG. 1 through FIG. 15, the following describes Embodiment 1.

### [1-1. Schematic Configuration]

FIG. 1 is a schematic view of an information management system according to Embodiment 1.

More specifically, FIG. 1 shows a plurality of home appliances 100, mobile terminal 200, information management device 300, communication network 400, and router 500. Of these structural elements, information management system 1 includes, for example, a plurality of home appliances 100, mobile terminal 200, and information management device 300. FIG. 1 also shows, as examples of a plurality of home appliances 100, an air conditioner, a refrigerator, a lighting device, a television, a recording/playback device, and a washing machine. A plurality of home appliances 100 may be home appliances other than the foregoing home appliances. A plurality of home appliances 100 are devices used by a user, and owned or purchased by the user.

Information management system 1 is a system for estimating the current attribute information of the user, and updating the user information of such user, using the estimated current attribute information. Information management system 1 may also be a system for presenting, to the user, information that corresponds to the user information.

In the present embodiment, an information management application on the cloud collects items of device data, each including an operating status of each of home appliances 100 located inside house 501, estimates the current attribute information of the user in accordance with the collected items of device data, and updates the user information so that the estimated current attribute information is reflected in the user information. The user performs an input, on a predetermined application in mobile terminal 200, for permitting the presentation of information on mobile terminal 200. The predetermined application in mobile terminal 200 is, for example, a social networking game. Also, the input for permitting the presentation of information on mobile terminal 200 is an input indicating that the activation of the social networking game on mobile terminal 200 is permitted. Note the predetermined application is not limited to a social networking game, and thus may be another application. Also, the foregoing input for permission may be accepted on the operating system (OS) of mobile terminal 200, and thus not limited to being accepted on the predetermined application. When the user permits the presentation of information, information management device 300 presents information that corresponds to the latest user information of the user. Examples of the information to be presented include an advertisement.

The following specifically describes the structural elements.

### [1-1-1. Mobile Terminal]

With reference to FIG. 2, the following describes the hardware configuration of mobile terminal 200.

FIG. 2 is a block diagram showing an exemplary hardware configuration of the mobile terminal according to Embodiment 1.

As shown in FIG. 2, mobile terminal 200 includes processor 201, main memory 202, storage 203, communication interface (IF) 204, GPS module 205, input interface (IF) 206, and display 207. Mobile terminal 200 is, for example, an information terminal, such as a smartphone and a tablet terminal, capable of performing communications. Mobile terminal 200 is an example of the second device. Note that the second device is not limited to a mobile terminal, and thus may be an information terminal such as a desktop personal computer, a laptop personal computer, and so forth.

Processor 201 reads a control program for operating mobile terminal 200 from storage 203 to execute the read control program.

Main memory 202 is a volatile storage area used as a work area by processor 201 in executing the control program (in other words, main storage). Main memory 202 is, for example, a random-access memory (RAM).

Storage 203 is a nonvolatile storage area that stores the control program, contents, and so forth (in other words, auxiliary storage). Examples of the contents include videos, music, and documents. Storage 203 is, for example, a read only memory (ROM), a flash memory, a hard disk drive (HDD), etc.

Communication IF 204 is a communication interface that communicates with information management device 300 over communication network 400. Stated differently, communication IF 204 may be any communication interfaces capable of connecting to and communicating with communication network 400. More specifically, communication IF 204 is a communication interface that connects to and communicates with communication network 400 by establishing a communication connection with router 500 or a base station of a mobile communications network. Communication IF 204 may be, for example, a wireless local area network (LAN) interface compliant with an IEEE802.11a, b, g, n, or ac standard, or a wireless communication interface compliant with a communication standard utilized in a mobile communications system such as the third-generation mobile communications system (3G), the fourth-generation mobile communications system (4G), LTE^{®}, and the fifth-generation mobile communications system (5G). Mobile terminal 200 may connect to and communicate with router 500 via communication IF 204 when in house 501, and may connect to and communicate with a base station of the mobile communications system when in outside.

Note that communication IF 204 may be a communication interface that connects to and communicates with communication network 400 by establishing a communication connection with another mobile terminal. In this case, communication IF 204 may be, for example, a wireless LAN interface or a wireless communication interface compliant with a Bluetooth^{®} standard.

GPS module 205 is a module that estimates the position of mobile terminal 200 by receiving a signal from a global positioning system (GPS) satellite.

Input IF 206 is, for example, a touch panel that is located on the top surface of display 207 to accept a user's input to a user interface (UI) displayed on display 207. Input IF 206 may be, for example, an input device including physical switches, such as a numeric keypad and a keyboard.

Display 207 is a display device that displays the result of processing performed by processor 201. Examples of display 207 include a liquid crystal display and an organic electroluminescence display.

### [1-1-2. Information Management Device]

With reference to FIG. 3, the following describes the hardware configuration of information management device 300.

FIG. 3 is a block diagram showing an exemplary hardware configuration of the information management device according to the embodiment.

As shown in FIG. 3, information management device 300 includes processor 301, main memory 302, storage 303, and communication IF 304. Information management device 300 is, for example, a server. Information management device 300 may include a plurality of devices.

Processor 301 reads a control program for operating information management device 300 from storage 303 to execute the read control program.

Main memory 302 is a volatile storage area used as a work area by processor 301 in executing the control program (in other words, main storage). Main memory 302 is, for example, a RAM.

Storage 303 is a nonvolatile storage area that stores the control program, various data, and so forth (in other words, auxiliary storage). Storage 303 is, for example, a ROM, a flash memory, an HDD, etc. Note that the control program stored in storage 303 includes a program for computation performed in an information management method to be described later.

Communication IF 304 is a communication interface that communicates with mobile terminal 200 and a plurality of home appliances 100 over communication network 400. Communication IF 304 may be, for example, a wired LAN interface. Note that communication IF 304 may be a wireless LAN interface. Communication IF 304 is not limited to a LAN interface, and thus may be any communication interfaces capable of establishing a communication connection with communication network 400.

### [1-1-3. Home Appliance]

With reference to FIG. 4, the following describes the hardware configuration of home appliance 100.

FIG. 4 is a block diagram showing an exemplary hardware configuration of a home appliance according to Embodiment 1.

As shown in FIG. 4, home appliance 100 includes processor 101, main memory 102, storage 103, communication IF 104, sensor 105, and power source 106. Home appliance 100 is an example of the first device.

Processor 101 reads a control program for operating home appliance 100 from storage 103 to execute the read control program.

Main memory 102 is a volatile storage area used as a work area by processor 101 in executing the control program (in other words, main storage). Main memory 102 is, for example, a RAM.

Storage 103 is a nonvolatile storage area that stores the control program, and so forth (in other words, auxiliary storage). Storage 103 is, for example, a ROM, a flash memory, and an HDD.

Communication IF 104 is a communication interface that communicates with information management device 300 over communication network 400 by connecting to and communicating with router 500. Stated differently, communication IF 104 may be any communication interfaces capable of connecting to and communicating with router 500. For example, communication IF 104 may be, for example, a wireless local area network (LAN) interface compliant with an IEEE802.11a, b, g, n, or ac standard, a wireless communication interface compliant with a Bluetooth^{®} standard, or a wireless communication interface compliant with a Zigbee^{®} standard.

Note that communication IF 104 may not be a wireless communication interface that connects to and communicates with router 500 over a wireless LAN. Communication IF 104 thus may be, for example, a wireless communication interface that communicates with information management device 300 over communication network 400 by connecting to and communicating with a base station for long-distance wireless communication, such as low power wide area (LPWA).

Sensor 105 is a sensor that detects various statuses of home appliance 100. Various statuses detected by sensor 105 are obtained and used by processor 101 in executing the control program. When home appliance 100 includes, for example, an opening/closing portion that opens and closes, such as a door, a lid, and a tray, sensor 105 may be a sensor that detects an open/close status of the opening/closing portion. Sensor 105 may also be a human detecting sensor that detects whether a person is present in the space around home appliance 100. Alternatively, sensor 105 may be a temperature sensor that detects the temperature in the space around home appliance 100 or the temperature inside of home appliance 100.

Power source 106 receives, from an external power source, electric power used by home appliance 100 to operate, and supplies the received electric power to the structural elements of home appliance 100.

### [1-1-4. Communication Network]

With reference to FIG. 1, the following describes the configuration of the communication network.

Communication network 400 is a communication network over which a plurality of home appliances 100, mobile terminal 200, information management device 300, and router 500 communicate with one another. Communication network 400 may be a general-purpose network such as the Internet, or may be a dedicated network over which each of a plurality of home appliances 100 or mobile terminal 200 communicates with information management device 300.

### [1-1-5. Router]

Router 500 is capable of communicating with a plurality of home appliances 100 and mobile terminal 200. Router 500 is provided in house 501. Router 500 is capable of communicating with information management device 300 over communication network 400 such as the Internet. Router 500 communicates between a plurality of home appliances 100 and information management device 300 by communicating with a plurality of home appliances 100 and communicating with information management device 300 over communication network 400. For example, router 500 communicates with a plurality of home appliances 100 wirelessly and communicates with information management device 300 by wire.

Router 500 is also capable of communicating with mobile terminal 200. For example, router 500 wirelessly communicates with mobile terminal 200.

### [1-2. Functional Configuration of Information Management System]

With reference to FIG. 5, the following describes the functional configuration of information management system 1.

FIG. 5 is a block diagram showing an exemplary functional configuration of the information management system according to Embodiment 1.

### (Functional Configuration of Mobile Terminal)

First, the functional configuration of mobile terminal 200 will be described.

Mobile terminal 200 includes, as its functional elements, communication unit 211, controller 212, input unit 213, display unit 214, and position obtainer 215.

Communication unit 211 establishes a communication connection with information management device 300 over communication network 400 to communicate with information management device 300. Communication unit 211 sends, to information management device 300, various items of information outputted from controller 212. Various items of information sent from communication unit 211 to information management device 300 may include the terminal ID that identifies mobile terminal 200 or the user ID to be described later. Communication unit 211 also receives information outputted from information management device 300, and outputs the received information to controller 212. Communication unit 211 is implemented by, for example, processor 201, main memory 202, storage 203, and communication IF 204.

Controller 212 executes a predetermined application. Controller 212 outputs, to communication unit 211, various items of information, as the user information, inputted to input unit 213 in the user registration performed on the predetermined application. Through this, controller 212 causes communication unit 211 to send the user information to information management device 300. For example, controller 212 generates user interface (UI) 600 as illustrated in FIG. 6, and causes display unit 214 to display such generated UI 600, thereby prompting the user to perform an input to UI 600.

FIG. 6 is a diagram showing an exemplary UI used for user registration.

As shown in FIG. 6, UI 600 includes e-mail address box 601, login ID box 602, password box 603, full-name box 604, postal address box 605, date of birth box 606, telephone number box 607, gender selection button 608, occupation selection list 609, occupancy status selection list 610, family composition selection list 611, hobby/preference checkbox 612, product category checkbox 613, and accept button 614.

E-mail address box 601 is an interface for accepting an input of a user's e-mail address. E-mail address box 601 is, for example, a textbox. Login ID box 602 is an interface for accepting an input of a user's login ID. Login ID box 602 is, for example, a textbox. Password box 603 is an interface for accepting an input of a password used to authenticate a login performed with the login ID inputted to login ID box 602. Password box 603 is, for example, a textbox. Note that "login" here is, for example, a process performed by the user using the information terminal to authenticate the authority to edit the user information of the user registered in the user registration.

Full-name box 604 is an interface for accepting an input of the user's full name. Full-name box 604 is, for example, a textbox. Postal address box 605 is an interface for accepting an input of a user's postal address. Postal address box 605 is, for example, a textbox. Date of birth box 606 is an interface for accepting an input of the user's date of birth. Date of birth box 606 is, for example, a textbox. Telephone number box 607 is an interface for accepting an input of a user's telephone number. Telephone number box 607 is, for example, a textbox. Gender selection button 608 is an interface of accepting an input of the user's gender. Gender selection button 608 is, for example, a radio button. Note that gender selection button 608 may accept a gender other than male or female.

Occupation selection list 609 is an interface for accepting an input of a user's occupation. Occupation selection list 609 is, for example, a dropdown list. Occupancy status selection list 610 is an interface for accepting an input of the user's occupancy status. Occupancy status selection list 610 is, for example, a dropdown list. Family composition selection list 611 is an interface for accepting an input of the composition of the user's family. Family composition selection list 611 is, for example, a dropdown list. Hobby/preference checkbox 612 is an interface for accepting an input of the user's hobby/preference. Hobby/preference checkbox 612 is, for example, a checkbox. Product category checkbox 613 is an interface for accepting an input of a product category of the user's interest. Product category checkbox 613 is, for example, a checkbox. Accept button 614 is a button for accepting the inputs to interfaces 601 through 613.

Other than the above, UI 600 may also include a textbox for accepting a user's nickname, handle name, etc., a textbox for accepting the region of the user's residence, and/or a textbox for accepting the postal code of the user's postal address.

After an input to accept button 614 is performed (e.g., by tapping or clicking), controller 212 causes communication unit 211 to send, to information management device 300, the user information represented by the inputs to interfaces 601 through 613. As such, the user information comprises items of attribute information including, for example, the e-mail address, the login ID, the password, the full-name, the postal address, the date of birth, the telephone number, the gender, the occupation, the occupancy status, the family composition, the hobby/preference, and the product category of interest.

Controller 212 also outputs, to communication unit 211, information inputted to input unit 213 in device registration performed on the predetermined application as device information of a device owned by the user. Through this, controller 212 causes communication unit 211 to send the device information to information management device 300. The device information is generated for each of a plurality of home appliances 100 by inputting information in device registration. As such, one item of device information corresponds to one home appliance 100. Each device information includes the device ID that identifies the corresponding home appliance 100. Each device information may include performance information on the performance of the corresponding home appliance 100. The performance information may be information indicating, for example, the performance of a device, or may be information used to identify the performance of the device, such as the device type and the device model. Each device information may include position information indicating the position in which the corresponding home appliance 100 is located. The position in which the device is located is a position inside of house 501. When house 501 includes a plurality of rooms, the position in which the device is located indicates the type of the room in which the device is located. The type of the room is, for example, a living room, a dining room, a kitchen, a Japanese-style room, a bedroom, a child's room, a study room, and so forth. Note that device registration may be performed in a terminal different from mobile terminal 200.

Also, when input unit 213 accepts an input, on the predetermined application, for permitting the presentation of information on display unit 214 of mobile terminal 200, controller 212 outputs, to communication unit 211, permission information for permitting the presentation of information. Through this, controller 212 causes communication unit 211 to send the permission information to information management device 300.

Controller 212 also obtains position information from position obtainer 215, and outputs the obtained position information to communication unit 211. Controller 212 may obtain position information from position obtainer 215 every time the predetermined application is activated and output the obtained position information to communication unit 211. Alternatively, controller 212 may obtain position information from position obtainer 215 at predetermined periods. In this case, controller 212 may output the position information to communication unit 211 every time controller 212 obtains the position information, or may accumulate items of position information obtained at different timings in storage 203 and then output, to communication unit 211, the items of position information accumulated in storage 203.

Controller 212 also executes the predetermined application to generate UI 600 for user registration or another UI for accepting an input for permitting the presentation of information on display unit 214, and outputs, to display unit 214, UI 600 or the other UI generated.

Controller 212 also generates an image representing information received by communication unit 211 from information management device 300 in accordance with such received information, and outputs the generated image to display unit 214.

Controller 212 is implemented by, for example, processor 201, main memory 202, and storage 203.

Input unit 213 accepts an input from the user. More specifically, input unit 213 accepts an input performed by the user on the predetermined application being executed by controller 212. Input unit 213 accepts, for example, an input to UI 600 for user registration performed on the predetermined application or an input to the other UI for permitting the presentation of information (hereinafter also referred to as "presentation information") on display unit 214. Input unit 213 is implemented by, for example, processor 201, main memory 202, storage 203, and input IF 206.

Display unit 214 displays UI 600 or the other UI generated by controller 212. Display unit 214 also displays an image outputted from controller 212. Display unit 214 is implemented by, for example, processor 201, main memory 202, storage 203, and display 207.

Position obtainer 215 obtains position information indicating the position in which mobile terminal 200 is located. Position obtainer 215 is implemented by, for example, GPS module 205, etc.

Note that the predetermined application used for user registration or device registration may be an application having a function of user registration or may be an application such as a Web browser for accessing a Web site on which user registration is performed. The predetermined application used for user registration or device registration may be executed by an information terminal different from mobile terminal 200. Stated differently, user registration or device registration may be performed using an information terminal different from mobile terminal 200.

### (Functional Configuration of Information Management Device)

The following describes the functional configuration of information management device 300.

Information management device 300 includes, as its functional elements, data obtainer 311, log database (DB) 312, living pattern determiner 313, living pattern DB 314, notification obtainer 315, updater 316, selector 317, attribute information DB 318, presentation information DB 319, and instruction unit 320.

Data obtainer 311 sequentially obtains device data including an operating status of home appliance 100 from each of a plurality of home appliances 100. Data obtainer 311 sequentially outputs the obtained items of device data to log DB 312 to accumulate these items of device data in log DB 312. The device data obtained from each of a plurality of home appliances 100 is an example of the first device data.

Here, each device data sequentially obtained includes: the detection result from sensor 105 included in home appliance 100; availability of electric power supply from power source 106 included in home appliance 100; status of control performed by processor 101 of home appliance 100; and so forth. Each device data includes, for example, at least one of: the open/close status of the opening/closing portion of home appliance 100; the detection result obtained by the human detecting sensor of whether any person is present in the space around home appliance 100; or the power status indicating whether home appliance 100 is powered ON or OFF. In the case where home appliance 100 is one of a television, a recorder, and a tuner device, for example, each device data may be viewed program information indicating programs viewed in home appliance 100. Each device data may also include time information indicating the timing at which the device data was generated. Each device data also includes the device ID of the device that has generated the device data.

Data obtainer 311 sequentially obtains, from mobile terminal 200, position information indicating the position of mobile terminal 200. The position information obtained from mobile terminal 200 is an example of the second device data. Note that the second device data is not limited to the position information, and thus may be detection results obtained by various sensors included in mobile terminal 200, the user's history of Web browsing on mobile terminal 200, and so forth.

Data obtainer 311 also obtains, from mobile terminal 200, user information used for user registration. Through this, for example, data obtainer 311 stores, in log DB 312, the user ID included in the user information and the terminal ID of mobile terminal 200 in association with each other.

Data obtainer 311 may also obtain device information from mobile terminal 200. The device information is another example of the first device data. Subsequently, data obtainer 311 stores, in log DB 312, the user ID, which is associated with the terminal ID of mobile terminal 200 that has sent the device information and the device ID included in the obtained device information in association with each other. Through this, the user ID and the device ID are associated with each other. As such, when data obtainer 311 obtains the device data from each of a plurality of home appliances 100, such device data is associated with the user ID that is associated with the device ID of home appliance 100 from which the device data has been sent.

Note that a plurality of home appliances 100 and mobile terminal 200 may not be associated with each other in the foregoing manner, and thus may be associated with each other by being connected to the same router 500. More specifically, when mobile terminal 200 is wirelessly connected to router 500 under a condition that each of a plurality of home appliances 100 is wirelessly connected to router 500, each home appliance 100 is able to identify mobile terminal 200 having the same global IP address as the global IP address of such home appliance 100. It is highly possible that home appliance 100 and mobile terminal 200 that are wirelessly connected to the same router 500 are owned by the same user. As such, a plurality of home appliances 100 and mobile terminal 200 may be associated with each other by being wirelessly connected to the same router 500.

Data obtainer 311 is implemented by, for example, processor 301, main memory 302, storage 303, and communication IF 304.

Log DB 312 stores the items of device data obtained by data obtainer 311. Log DB 312 also stores the user information, the items of device information, and the position information obtained by data obtainer 311. Log DB 312 is implemented by, for example, storage 303.

Living pattern determiner 313 determines a living pattern of the user identified by the user ID associated with device data, on the basis of the device data stored in log DB 312. Stated differently, living pattern determiner 313 is an example of the estimator that estimates a living pattern as first attribute information that is the current attribute information of the user, on the basis of device data. More specifically, living pattern determiner 313 obtains device data that has not yet been analyzed from log DB 312 at predetermined time intervals, analyzes the obtained device data, and stores the result of the analysis in living pattern DB 314. The predetermined time intervals is, for example, every other day, every other week, and so forth. Alternatively, living pattern determiner 313 may determine the current living pattern of the user by use of items of device data obtained during a period corresponding to a predetermined time interval with respect to the present time, i.e., a period up until the present time from the predetermined time interval before. For example, living pattern determiner 313 analyzes the items of device data to estimate the behavior of the user or a member of the group to which the user belongs to. Note that the group to which the user belongs is, for example, a family, a communal group in a shared house constituted by the user and other users, and so forth. The following description uses members of the user's family as exemplary members of the group to which the user belongs.

Living pattern determiner 313 refers to a living pattern model by use of device data read from log DB 312. The living pattern model, which is used to estimate a specific living pattern, is information in which a device data type preliminary associated with such specific living pattern is associated with the time at which the device data was generated. Living pattern determiner 313 estimates that the user or a user's family member has performed a behavior that corresponds to the device data type included in the device data in the living pattern model. Living pattern determiner 313 further estimates time or a time range of a day in which the estimated behavior has been performed, using the time at which home appliance 100 generated such device data. Note that the living pattern model may include time range conditions indicating time ranges of a day in which a plurality of living patterns included in the living pattern model are estimated to be performed. Stated differently, a plurality of living patterns in the living pattern model may be associated with the corresponding time range conditions. Here, the time range conditions indicate specific time ranges of a day. A distinction may be made between the time range in which a specific living pattern is estimated to be performed on weekdays and the time range in which a specific living pattern is estimated to be performed on off days. In this case, when a user works during daytime hours on weekdays, for example, a time range condition indicates that it is prohibited to estimate that the user is sleeping, even when a lighting device in the bedroom is OFF during daytime hours on weekdays. A time range condition is not limited to prohibiting something, and thus a time range of a behavior that is highly possible to be performed in a specific time range may be set as a time range condition. Stated differently, in a time range condition that corresponds to the present time, one behavior that corresponds to the current device data, among a plurality of behaviors that are highly possible to be performed, may be identified as the behavior of the user.

Note that living pattern determiner 313 may determine a living pattern from the obtained device data, using a machine learning model obtained by a preliminary performed machine learning that uses the correct data of device data and a living pattern.

Also, a time range condition may include the order in which a first living pattern and a second living pattern are performed. Assume, for example, that a time range condition is that waking up in the morning is performed as the first living pattern, which is followed by the second living pattern of preparing breakfast. In this case, it is prohibited to estimate, in accordance with such time range condition, that waking up is performed after the preparation of breakfast.

Living pattern determiner 313 may use device data indicating the power status of a vacuum cleaner, for example, to estimate that the period from when the user starts cleaning up with the vacuum cleaner to when the user fishes cleaning up is a time range of the user's cleanup. Stated differently, to estimate the time range in which the user performs cleanup, for example, living pattern determiner 313 may use items of device data on the vacuum cleaner obtained during a predetermined past period up until the present time. Living pattern determiner 313 may then estimate, as the time range of the user's cleanup, the time range from the average of the times at which the vacuum cleaner is powered ON to the average of the times at which the vacuum cleaner is powered OFF during the predetermined period. Note that the predetermined period is, for example, a week, two weeks, a month, and so forth. Also note that living pattern determiner 313 may estimate another behavior on the basis of time variations in device data of the same type, for example, as with the estimation of the time range in which cleanup is performed.

Living pattern determiner 313 stores the estimated living pattern in living pattern DB 314. Living pattern determiner 313 is implemented by, for example, processor 301, main memory 302, and storage 303.

Notification obtainer 315 obtains, from mobile terminal 200, a notification about the timing at which presentation information is to be presented on mobile terminal 200. Upon receipt of the notification, notification obtainer 315 outputs, to selector 317, that the notification has been obtained from mobile terminal 200. Notification obtainer 315 is implemented by, for example, processor 301, main memory 302, storage 303, and communication IF 304.

Updater 316 updates the user information stored in attribute information DB 318, using a living pattern stored in living pattern DB 314. Updater 316 may use the living pattern per se read from living pattern DB 314 as first attribute information or may estimate first attribute information from the read living pattern. To estimate first attribute information from the read living pattern, updater 316 uses the read living pattern to refer to an attribute information model. The attribute information model, which is used to estimate specific attribute information, is information associated with the living pattern preliminary associated with such specific attribute information. Updater 316 estimates first attribute information of the user for each of the living patterns in the attribute information model. As described above, updater 316 is another example of the estimator that estimates first attribute information that is the current attribute information of the user from a living pattern that is based on device data.

Updater 316 compares the estimated first attribute information and second attribute information stored in attribute information DB 318 as the user information to determine whether any difference is present between the first attribute information and the second attribute information. Updater 316 may update the user information with the first attribute information when determining that a difference is present, and may not update the user information when determining that no difference is present.

FIG. 7 is a diagram showing a relation among an operating status indicated by device data, attribute information estimated from the operating status, and registration information that is attribute information registered in attribute information DB 318. The registration information is an example of the second attribute information.

As shown in FIG. 7, in the case where home appliance 100 is a washing machine, updater 316 is able to estimate the number of family members as first attribute information of the user from the operating status indicating the amount of laundry and the frequency of washing laundry. Updater 316 may then compare the estimated number of family members and the family composition in the registration information, and update the registration information to the estimated number of family members when a difference is present. For example, updater 316 estimates a larger number of family members when the amount of laundry is larger and the frequency of washing laundry is higher. For example, when the number of family members is estimated to be two or three persons, despite that the family composition in the registration information indicates an unmarried, single person, the family composition in the registration information may be updated to the estimated number of family members.

In the case where home appliance 100 is a washing machine, updater 316 may also estimate, as first attribute information of the user, attribute information such as the family composition and hobby/preference, and attribute information that is not set at the registration time, from the operating status indicating the setting of a washing mode. Updater 316 may then compare the estimated attribute information such as the family composition and hobby/preference, and attribute information that is not set at the registration time with the corresponding attribute information in the registration information, and update the registration information to the estimated attribute information when a difference is present.

When the washing mode is set to "mud", for example, first attribute information may be estimated as "having a child", and used to update the family composition in the registration information. Also, first attribute information may be estimated as "doing sport/outdoor activity", and used to update the hobby/preference in the registration information by adding "sport", "outdoor activity", and "childcare/education".

When the washing mode is set to "delicate", for example, first attribute information may be estimated as "fashion-conscious", and used to update the hobby/preference in the registration information by adding "fashion". Also in this case, first attribute information may be estimated as "fully utilizing home appliance" to perform updating by adding attribute information "full utilization of home appliance" that is not set at the registration time.

When the washing mode is set to "self-selected program", for example, first attribute information may be estimated as "fully utilizing home appliance" and used to perform updating by adding attribute information "full utilization of home appliance" that is not set at the registration time.

In the case where home appliance 100 is an air conditioner, updater 316 may estimate, as first attribute information of the user, attribute information that is not set at the registration time, from an operating status indicating the setting of the air conditioner or a detection result of a sensor of the air conditioner. Updater 316 may then compare the estimated attribute information such as the family composition and hobby/preference, and attribute information that is not set at the registration time with the corresponding attribute information in the registration information, and update the registration information to the estimated attribute information when a difference is present.

For example, using the time set on the timer of the air conditioner, first attribute information may be estimated as "time to go to bed" or "time to wake up", and used to perform updating by adding attribute information "time to go to bed" or "time to wake up" in the life rhythm that is not set at the registration time.

For example, using the temperature setting of the air conditioner, first attribute information may be estimated as "sensitive to heat/cold" or "eco-conscious", and used to perform updating by adding attribute information "sensitive to heat/cold" in the physical characteristics that is not set at the registration time, or may be used to perform updating by adding attribute information "energy-saving conscious" that is not set at the registration time.

For example, using a detection result of the human detecting sensor of the air conditioner, first attribute information may be estimated as "hours of staying home" or "off days/working days", and used to perform updating by adding attribute information "hours of staying home" or "off days/working days" that is not set at the registration time.

For example, using a detection result of the temperature sensor of the compressor unit of the air conditioner, first attribute information may be estimated as "region" that is correlated to the detection result of the temperature sensor, and used to determine whether the postal address has changed, i.e., whether the user has moved.

In the case where home appliance 100 is a television, updater 316 may estimate, as first attribute information of the user, attribute information such as hobby/preference and attribute information that is not set at the registration time, from an operating status indicating the television viewing length, viewed programs, and so forth. Updater 316 may then compare the estimated attribute information such as the family composition and hobby/preference, and attribute information that is not set at the registration time with the corresponding attribute information in the registration information, and update the registration information to the estimated attribute information when a difference is present.

For example, using the time range of television viewing, first attribute information may be estimated as "hours of staying home" or "off days/working days", and used to perform updating by adding attribute information "hours of staying home" or "off days/working days" in the life rhythm that is not set at the registration time.

For example, using the viewed television programs, first attribute information may be estimated as "hobby/preference", and used to update the attribute information of hobby/preference.

Without being limited to an example shown in FIG. 7, updater 316 may estimate an attribute candidate for first attribute information to be updated/added from a characteristic operating status or characteristic performance information indicated by each device data as shown in FIG. 8 through FIG. 12.

FIG. 8 through FIG. 11 are diagrams showing a relation among home appliance(s), a characteristic operating status, registration information, and an attribute candidate to be updated/added. FIG. 8 shows an example case where first attribute information relating to the hobby and preference is estimated from device data. FIG. 9 shows an example case where first attribute information relating to the family composition is estimated from device data. FIG. 10 shows an example case where first attribute information relating to the lifestyle habit or residential environment is estimated from device data. FIG. 11 shows an example case where first attribute information is estimated from items of device data obtained from a combination of two devices from among a plurality of home appliances 100 and mobile terminal 200.

FIG. 12 is a diagram showing a relation among home appliance(s), characteristic performance information, registration information, and an attribute candidate to be updated/added.

Returning to FIG. 5, the following describes selector 317.

Selector 317 selects one of a plurality of candidates stored in presentation information DB 319 as information to be presented on mobile terminal 200, in accordance with the corresponding attribute information of the user stored in attribute information DB 318. Such one of the candidates selected by selector 317 is outputted to instruction unit 320.

Attribute information DB 318 is a storage device that stores items of attribute information indicating the attributes of the user. Attribute information DB 318 is implemented by, for example, storage 303. Attribute information DB 318 is an example of the storage.

The attributes of the user may be, for example, the hobbies or preferences of the user, or may be demographic information. The hobbies and preferences of a certain user are, for example, game, game machine, game strategy, baseball, American football, skiing, camera, audio device, recorder, liquid-crystal television, high-definition television, video, social networking service (SNS), music, coffee, cooking recipes, automobile, automobile exterior, travel, travelling bag, route map, childcare, interior decoration, garden, and so forth. The demographic information is the user's age, gender, residential area, annual income, married/unmarried, with or without child, type of occupation, place of employment, academic background, and so forth.

Note that the attribute information of the user stored in attribute information DB 318 may be generated on the basis of the user's postal address, hobby and preference information, and so forth included in the user information sent from mobile terminal 200. Alternatively, the attribute information of the user may be generated by mobile terminal 200 or another information terminal on the basis of the Web browsing history of the user. As described above, the hobbies or preferences of the user of mobile terminal 200 are obtained beforehand.

Presentation information DB 319 is a storage device that stores a plurality of candidates for presentation information to be presented on mobile terminal 200 of the user. Presentation information DB 319 is implemented by, for example, storage 303. Examples of a plurality of candidates include the items of information shown in FIG. 13.

FIG. 13 is a diagram showing an example of presentation information associated with attribute information.

As shown in FIG. 13, each of a plurality of candidates for presentation information may be associated with corresponding attribute information of the user. With this, it is possible for selector 317 to obtain attribute information of the user from attribute information DB 318, and refer to information stored in presentation information DB 319, using the obtained attribute information of the user. Through this, selector 317 is able to select the presentation information. As shown in FIG. 13, presentation information is, for example, an advertisement of a product or service that matches the corresponding attribute information of the user.

When attribute information of the user indicates that the user is a full-time female worker living in the urban-central area, for example, selector 317 selects, as presentation information, information on a new laundry detergent that removes the smell of laundry dried indoors. Similarly, when attribute information of the user indicates that the user is an education conscious person having a child in his/her forties, for example, selector 317 selects, as presentation information, information on a correspondence course for new junior high school students. Also, when attribute information of the user indicates that the user is a male with high income whose hobby/preference is a recorder, for example, selector 317 selects, as presentation information, information on a new 4K-capable recorder. When attribute information of the user indicates that the user is a part-time worker living near a supermarket, for example, selector 317 selects, as presentation information, bargain information of the supermarket. When attribute information of the user indicates that the user is a full-time female worker, for example, selector 317 may select, as presentation information, information on an easy cooking seasoning for Mapo tofu.

Instruction unit 320 provides an instruction on the presentation of presentation information on mobile terminal 200. The presentation information instructed by instruction unit 320 is the single candidate selected by selector 317. To provide an instruction on the presentation of presentation information, instruction unit 320 sends, to mobile terminal 200, information including the presentation information and an instruction to present the presentation information on mobile terminal 200.

Instruction unit 320 is implemented by, for example, processor 301, main memory 302, storage 303, and communication IF 304.

Each of a plurality of home appliances 100 sends device data to information management device 300 over communication network 400 at predetermined time intervals. For example, each of a plurality of home appliances 100 may send device data every five minutes. Each of a plurality of home appliances 100 may send device data to information management device 300 over communication network 400 at predetermined time intervals, only when home appliance 100 is powered ON. In this case, when being unable to obtain device data from a home appliance after the predetermined time interval has elapsed since the last device data was obtained, information management device 300 may determine that such device is powered OFF.

### [1-3. Operation]

The following describes an information presentation method performed in information management system 1 with the above configuration.

FIG. 14 is a sequence diagram showing an exemplary information management method performed in the information management system.

First, mobile terminal 200 sends, to information management device 300, user information and device information over communication network 400 in response to user registration and device registration having been performed (S11).

Through this, information management device 300 receives the user information and the device information, and registers the received user information and device information (S12).

Next, each of a plurality of home appliances 100 sends device data to information management device 300 over communication network 400 (S13). Each of a plurality of home appliances 100 sends the device data generated at this timing to information management device 300 at predetermined time intervals.

Information management device 300 updates attribute information on the basis of the device data received (S14). A detailed process of updating attribute information will be described later with reference to FIG. 15.

Next, mobile terminal 200 sends a notification about the timing at which presentation information is to be presented on mobile terminal 200 (S15). Through this, notification obtainer 315 of information management device 300 obtains, from mobile terminal 200, the foregoing notification indicating the timing.

Selector 317 of information management device 300 selects one of the candidates for presentation information to be presented on mobile terminal 200, in accordance with the latest attribute information of the user (S16).

Instruction unit 320 of information management device 300 sends, to mobile terminal 200, instruction information instructing to present the presentation information (S17).

Upon receipt of the instruction information, mobile terminal 200 displays the presentation information on display unit 214 (S18).

Note that the details of the foregoing steps have been described in the description of the functional configuration of information management system 1 as details of the operations performed by the processing units, and thus are not described here.

FIG. 15 is a flowchart of an exemplary process of updating attribute information.

Data obtainer 311 of information management device 300 obtains device data from each of a plurality of home appliances 100 at predetermined time intervals (S21), and accumulates, in log DB 312, the items of device data obtained (S22).

Living pattern determiner 313 uses the items of device data accumulated in log DB 312 to determine a living pattern of the user (S23), and accumulates the determined living pattern in living pattern DB 314 (S24).

Updater 316 determines whether there are any changes in the attribute information (S25). More specifically, updater 316 estimates first attribute information, and compares the estimated first attribute information and second attribute information stored in attribute information DB 318 as the user information. Through this, updater 316 determines whether a difference is present between the first attribute information and the second attribute information.

When determining that the attribute information has changed (Yes in S25), updater 316 updates the user information in attribute information DB 318 with the estimated first attribute information (S26), and when determining that the attribute information has not changed (No in S25), updater 316 ends the process of updating attribute information without updating the user information.

### [1-4. Effects, etc.]

Information management device 300 of information management system 1 according to the present embodiment includes attribute information DB 318, data obtainer 311, living pattern determiner 313, and updater 316. Attribute information DB 318 stores attribute information of the user as user information. Data obtainer 311 obtains device data including an operating status of home appliance 100 from each of a plurality of home appliances 100 used by the user. Living pattern determiner 313 estimates a living pattern of the user as first attribute information that is the current attribute information of the user, on the basis of the items of device data obtained. Updater 316 may estimate first attribute information, using the living pattern. Updater 316 uses the estimated first attribute information to update the user information stored in attribute information DB 318.

As described above, in information management system 1, first attribute information of the user is estimated on the basis of the items of device data obtained from a plurality of home appliances used by the user, and the user information is updated using the estimated first attribute information. This enables to update the user information, which is less likely to be updated after being registered, using the items of device data. Also, the user information is updated using items of device data that have been obtained on the basis of objective data. This enables an accurate updating of the user information.

Also, in information management system 1 according to the present embodiment, updater 316 compares the estimated first attribute information with the second attribute information stored in attribute information DB 318 as the user information to determine whether a difference is present between the first attribute information and the second attribute information. Updater 316 updates the user information with the first attribute information when determining that a difference is present and does not update the user information when determining that no difference is present.

As described above, in information management system 1, the user information is updated when there are any changes in the user information and not updated when there is no change in the user information. This reduces processing load when there is no change in the user information.

In information management system 1 according to the present embodiment, data obtainer 311 obtains device data from each of a plurality of home appliances 100. Updater 316 then estimates first attribute information on the basis of the items of device data obtained. As thus described, in information management system 1, the first attribute information is estimated on the basis of the items of device data obtained from a plurality of home appliances 100. This enables an accurate estimation of first attribute information.

In information management system 1 according to the present embodiment, data obtainer 311 further obtains device data including an operating status of mobile terminal 200 from mobile terminal 200 the user is using. Updater 316 estimates first attribute information on the basis of the items of device data of a plurality of home appliances 100 and the device data of mobile terminal 200. As thus described, in information management system 1, first attribute information is estimated further on the basis of the device data of mobile terminal 200 in addition to the items of device data of home appliances 100. This enables an accurate estimation of first attribute information.

In information management system 1 according to the present embodiment, each device data obtained by data obtainer 311 includes performance information on the performance of a corresponding one of home appliances 100. As thus described, in information management system 1, first attribute information is estimated further on the basis of the device data including the performance information. This enables an accurate estimation of first attribute information.

### [1-5. Variations]

### [1-5-1. Variation 1]

The following describes Variation 1 of Embodiment 1.

FIG. 16 is a block diagram showing an exemplary functional configuration of an information management system according to Variation 1 of Embodiment 1.

Information management system 1A according to Variation 1 of Embodiment 1 is different from information management system 1 according to Embodiment 1 in that the function of information management device 300 in information management system 1 is separated into two information management devices 300Aa and 300Ab. In FIG. 16, the same structural elements as those of Embodiment 1 are assigned the same reference marks as those of Embodiment 1.

Information management device 300Aa includes notification obtainer 315, selector 317, attribute information DB 318, presentation information DB 319, and instruction unit 320. Information management device 300Ab includes data obtainer 311, log DB 312, living pattern determiner 313, living pattern DB 314, and updater 316. To update attribute information, updater 316 of information management device 300Ab sends first attribute information to information management device 300Aa, thereby updating the attribute information in attribute information DB 318. As thus described, the function of information management device 300 according to Embodiment 1 may be separated into two information management devices 300Aa and 300Ab.

### [1-5-2. Variation 2]

The following describes Variation 2 of Embodiment 1.

FIG. 17 is a block diagram showing an exemplary functional configuration of an information management system according to Variation 2 of Embodiment 1.

Information management system 1B according to Variation 2 of Embodiment 1 is different from information management system 1A according to Variation 1 of Embodiment 1 in that information management device 300Bb including data obtainer 311 that obtains device data from home appliances 100 includes attribute information DB 318. In FIG. 17, the same structural elements as those of Variation 1 of Embodiment 1 are assigned the same reference marks as those of Variation 1 of Embodiment 1.

Information management device 300Ba includes notification obtainer 315, selector 317, presentation information DB 319, and instruction unit 320. Information management device 300Bb includes data obtainer 311, log DB 312, living pattern determiner 313, living pattern DB 314, updater 316, and attribute information DB 318. To select presentation information from presentation information DB 319, selector 317 of information management device 300Bb obtains the latest attribute information of the user from attribute information DB 318 of information management device 300Bb, and selects presentation information in accordance with the latest attribute information obtained. As thus described, the function of information management device 300 according to Embodiment 1 may be separated into two information management devices 300Ba and 300Bb differently from those of Variation 1.

### [1-5-3. Variation 3]

The following describes Variation 3 of Embodiment 1.

FIG. 18 is a block diagram showing an exemplary functional configuration of an information management system according to Variation 3 of Embodiment 1.

Information management system 1C according to Variation 3 of Embodiment 1 is different from information management system 1 according to Embodiment 1 in that information management device 300C does not include living pattern determiner 313 and living pattern DB 314. In FIG. 18, the same structural elements as those of Embodiment 1 are assigned the same reference marks as those of Embodiment 1.

Information management device 300C includes data obtainer 311, log DB 312, notification obtainer 315, updater 316, selector 317, attribute information DB 318, presentation information DB 319, and instruction unit 320. Updater 316 obtains device data from log DB 312 and estimates, from the obtained device data, first attribute information that is the current attribute information of the user. Without comparing items of attribute information to determine whether to update attribute information, updater 316 may compare items of device data obtained from the predetermined time interval before up until the present time with items of device data obtained from the predetermined time interval before up until the point in time in the past before the present time. In this case, updater 316 may determine that the attribute information is to be updated when there are any variations in the items of device data. For example, updater 316 may compare time ranges, frequencies, etc. in which device data of the same type is obtained to determine that there are variations in the obtained device data when a difference between the time ranges or a difference in the frequencies exceed a threshold. Updater 316 may also determine that there are variations in the obtained device data when device data of a different type from that of the device data obtained in the past is obtained.

### [Embodiment 2]

The following describes an information management system according to Embodiment 2.

FIG. 19 is a block diagram showing an exemplary functional configuration of the information management system according to Embodiment 2.

Information management system 1D according to Embodiment 2 is different from information management system 1 according to Embodiment 1 in that information management device 300D further includes inquiry unit 321 and response acceptor 322. In FIG. 19, the same structural elements as those of Embodiment 1 are assigned the same reference marks as those of Embodiment 1.

When updater 316 determines that a difference is present between the first attribute information and the second attribute information, inquiry unit 321 sends, to mobile terminal 200 the user is using, an inquiry to confirm whether the estimated first attribute information is appropriate.

Upon reception of the inquiry, mobile terminal 200 displays an UI that corresponds to the inquiry on display unit 214, and accepts, from the user, an input performed onto input unit 213 indicating an answer to the inquiry. When accepting the input, mobile terminal 200 sends, to information management device 300D, a response that includes the answer to the inquiry. The answer to the inquiry includes information indicating whether the first attribute information estimated in information management device 300D is appropriate or information indicating whether to permit or reject updating of the attribute information of the user with the first attribute information.

Response acceptor 322 receives the response to the inquiry from mobile terminal 200, and permits or prohibits updating of the user information by updater 316, in accordance with the received response. Response acceptor 322 updates the attribute information in attribute information DB 318 with the first attribute information estimated by updater 316 when the received response indicates that the first attribute information is appropriate or that updating of the user information is permitted. Meanwhile, response acceptor 322 does not update the attribute information in attribute information DB 318 with the first attribute information estimated by updater 316 when the received response indicates that the first attribute information is inappropriate or that the updating of the user information is prohibited.

FIG. 20 is a flowchart of an exemplary process of updating attribute information performed by the information management device according to Embodiment 2. Stated differently, FIG. 20 is a flowchart showing another example of step S14 shown in FIG. 14.

First, the same processes as those of steps S21 through S25 in FIG. 15 are performed.

Subsequently, when updater 316 determines that the attribute information has changed (Yes in S25), inquiry unit 321 sends, to mobile terminal 200 the user is using, an inquiry to confirm whether the estimated first attribute information is appropriate (S31).

Response acceptor 322 then receives the response to the inquiry from mobile terminal 200 (S32).

Response acceptor 322 then determines whether to permit to update the attribute information in attribute information DB 318 with the first attribute information, in accordance with the received response (S33). Response acceptor 322 permits the updating when the received response indicates that the first attribute information is appropriate or that updating of the user information is permitted. Meanwhile, response acceptor 322 prohibits the updating when the received response indicates that the first attribute information is inappropriate or that the updating of the user information is prohibited.

When permitting the updating (Yes in S33), response acceptor 322 updates the user information in attribute information DB 318 with the estimated first attribute information (S26). When updater 316 determines that the attribute information has not changed (No in S25), or when prohibiting the updating (No in S33), response acceptor 322 ends the process of updating attribute information, without updating the user information.

Information management system 1 according to Embodiment 2 checks with the user about whether the first attribute information is appropriate, when there are any changes in the user information, to permit or prohibit the updating of the user information. This enables a more appropriate updating of the user information.

### [Embodiment 3]

The following describes an information management system according to Embodiment 3.

FIG. 21 is a block diagram showing an exemplary functional configuration of the information management system according to Embodiment 3.

Information management system 1E according to Embodiment 3 is different from information management system 1 according to Embodiment 1 in that information management device 300E further includes notification sender 323. In FIG. 21, the same structural elements as those of Embodiment 1 are assigned the same reference marks as those of Embodiment 1.

When updater 316 determines that a difference is present between the first attribute information and the second attribute information, notification sender 323 sends, to mobile terminal 200 the user is using, an update notification indicating that the user information has been updated with the estimated first attribute information. Through this, mobile terminal 200 receives the update notification, thereby enabling the user to know that a change has been made to the user information.

FIG. 22 is a flowchart of an exemplary process of updating attribute information performed by the information management device according to Embodiment 3. Stated differently, FIG. 22 is a flowchart showing another example of step S14 shown in FIG. 14.

First, the same processes as those of steps S21 through S26 in FIG. 15 are performed.

After step S26, notification sender 323 sends an update notification indicating that the user information has been updated with the estimated first attribute information (S41), and ends the process of updating attribute information.

As described above, information management system 1E is capable of notifying the user of that the user information has been updated with the first attribute information when any changes are present in the user information. This enables the user to know that a change has been made to the user information.

### [Another Embodiment]

The information management system according to the foregoing embodiments have been described as obtaining items of device data from a plurality of home appliances 100 and estimating the current first attribute information of the user, on the basis of the obtained items of device data, but the present disclosure is not limited to this configuration. The information management system may obtain item(s) of device data from a single home appliance 100 and estimate first attribute information of the user on the basis of the obtained item(s) of device data of the single home appliance 100. With this, it is possible to estimate first attribute information on the basis of at least one device data obtained from a single home appliance 100. This enables an efficient estimation of the first attribute information.

The embodiments have been described above to illustrate the technology according to the present disclosure, for which the accompanying drawings and detailed description have been provided.

The structural elements described in the accompanying drawings and detailed description can thus include not only the structural elements essential to solve the problems, but also structural elements unessential to solve the problems to illustrate the foregoing technology. As such, the fact that such unessential structural elements are illustrated in the accompanying drawings and detailed description should not lead to the immediate conclusion that such unessential structural elements are essential.

Also note that the foregoing embodiments are intended to illustrate the technology according to the present disclosure, and thus allow for various modifications, replacements, additions, omissions, and so forth made thereto within the scope of the claims and its equivalent scope.

### [Industrial Applicability]

The present disclosure is applicable to an information management system, an information management device, and information management method, etc. capable of updating user information of a device user to the latest information.

### [Reference Signs List]

- 1, 1A to 1E: information management system
- 100: home appliance
- 101: processor
- 102: main memory
- 103: storage
- 104: communication IF
- 105: sensor
- 106: power source
- 200: mobile terminal
- 201: processor
- 202: main memory
- 203: storage
- 204: communication IF
- 205: GPS module
- 206: input IF
- 207: display
- 211: communication unit
- 212: controller
- 213: input unit
- 214: display unit
- 215: position obtainer
- 300, 300Aa, 300Ab, 300Ba, 300Bb, 300C to 300E: information management device
- 301: processor
- 302: main memory
- 303: storage
- 304: communication IF
- 311: data obtainer
- 312: log DB
- 313: living pattern determiner
- 314: living pattern DB
- 315: notification obtainer
- 316: updater
- 317: selector
- 318: attribute information DB
- 319: presentation information DB
- 320: instruction unit
- 321: inquiry unit
- 322: response acceptor
- 323: notification sender
- 400: communication network
- 500: router
- 501: house

## Claims

1. An information management system, comprising:
a storage that stores attribute information of a user as user information;
an obtainer that obtains first device data from at least one first device used by the user, the first device data including an operating status of the at least one first device; and
an updater that updates the user information stored in the storage, using first attribute information that is based on the first device data obtained,
wherein the updater:
compares the first attribute information and second attribute information to determine whether a difference is present between the first attribute information and the second attribute information, the second attribute information being stored in the storage as the user information; and
updates the user information with the first attribute information when determining that the difference is present, and does not update the user information when determining that the difference is not present.

2. The information management system according to claim 1, further comprising:
an inquiry sender that sends an inquiry to an information processing terminal used by the user when the updater determines that the difference is present, the inquiry being intended to confirm whether the first attribute information is appropriate; and
a response acceptor that accepts a response to the inquiry from the information processing terminal, and permits or prohibits updating of the user information by the updater, in accordance with the response received.

3. The information management system according to claim 1, further comprising:
a notification sender that sends an update notification to an information processing terminal used by the user when the updater determines that the difference is present, the update notification indicating that the user information has been updated with the first attribute information.

4. The information management system according to any one of claims 1 to 3, further comprising:
an estimator that estimates current attribute information of the user as the first attribute information, based on the first device data obtained.

5. The information management system according to claim 4,
wherein the obtainer obtains at least one item of first device data from a single first device, the at least one item of first device data each being the first device data, the single first device being one of the at least one first device, and
the estimator estimates the first attribute information, based on the at least one item of first device data.

6. The information management system according to claim 4 or 5,
wherein the obtainer obtains the first device data from each of a plurality of first devices each being one of the at least one first device, and
the estimator estimates the first attribute information, based on the first device data obtained from each of the plurality of first devices.

7. The information management system according to any one of claims 4 to 6,
wherein the obtainer further obtains second device data from a second device that is an information processing terminal used by the user, the second device data including an operating status of the second device, and
the estimator estimates the first attribute information based on the first device data and the second device data that have been obtained.

8. The information management system according to any one of claims 1 to 7,
wherein the first device data obtained by the obtainer includes performance information on a performance of the at least one first device.

9. An information management device, comprising:
a storage that stores attribute information of a user as user information;
an obtainer that obtains first device data from at least one first device used by the user, the first device data including an operating status of the at least one first device; and
an updater that estimates first attribute information that is current attribute information of the user, based on the first device data obtained, and updates the user information stored in the storage, using the first attribute information estimated.

10. An information management method, comprising:
obtaining first device data from at least one first device used by a user, the first device data including an operating status of the at least one first device;
estimating first attribute information that is current attribute information of the user, based on the first device data obtained in the obtaining; and
updating user information stored in a storage device, using the first attribute information estimated in the estimating.
